# EUROPEAN PATENT APPLICATION

(11) **EP 4 793 636 A2**
(43) Date of publication of application: **19.08.2026**
(21) Application number: 26152536.4
(22) Date of filing: 19.01.2026
(51) Int. Cl.: G01N 23/04

(54) **X-RAY INSPECTION APPARATUS**

(30) Priority: 21.01.2025 JP 2025008270
(71) Applicant: Ishida Co., Ltd., Kyoto-shi Kyoto 606-8392 (JP)
(72) Inventor: OSE, Akane, Ritto-shi, Shiga, 520-3026 (JP)
(74) Representative: Global IP Europe Patentanwaltskanzlei

(57) **Abstract**

To provide an X-ray inspection apparatus that can correct past X-ray transmission images so that the extent to which there is a change in inspection performance can be inspected without running goods through the X-ray inspection apparatus. A predetermined judgment unit is employed instead of a judgment unit tending to judge conforming goods as nonconforming goods or a judgment unit tending to judge nonconforming goods as conforming goods and is applied to past X-ray transmission images. Furthermore, a predetermined correction unit is employed instead of a correction unit tending to perform processing with which conforming goods easily become nonconforming goods or a correction unit tending to perform processing with which nonconforming goods easily become conforming goods and is applied to past X-ray transmission images. Moreover, the threshold of a parameter of a judgment unit tending to judge conforming goods as nonconforming goods or a judgment unit tending to judge nonconforming goods as conforming goods is changed and applied to past X-ray transmission images.

## Description

### TECHNICAL FIELD

This invention relates to an inspection apparatus that judges whether inspection objects are contaminated with foreign objects based on transmission images of X-rays with which the inspection objects have been irradiated.

### BACKGROUND ART

X-ray inspection apparatus are widely utilized as apparatus that inspect for the presence of defects such as foreign object contamination in goods. For example, the inspection apparatus disclosed in patent document 1 (JP-A No. 2019-12011) includes correction means for correcting image data in order to perform more highly accurate inspections. Therefore, corrected images can be checked in real time.

### SUMMARY OF THE INVENTION

### TECHNICAL PROBLEM

However, only the most recent image can be used to check the corrected image processing results, and it is unknown what the results would be if the same correction were done to past images.

Therefore, there is desired an X-ray inspection apparatus that can correct past images so that the extent to which there is a change in inspection performance can be inspected without running goods through the X-ray inspection apparatus.

### SOLUTION TO PROBLEM

An X-ray inspection apparatus pertaining to a first aspect includes a conveyance unit, an X-ray irradiation unit, an X-ray detection unit, an inspection unit, an input unit, a storage unit, and a control unit. The conveyance unit conveys goods. The X-ray irradiation unit irradiates the conveyed goods with X-rays. The X-ray detection unit detects the X-rays transmitted through the goods. The inspection unit includes a plurality of judgment units and performs inspections of the goods by causing predetermined judgment units to make conforming/nonconforming judgments with respect to X-ray transmission images of the goods generated based on signals output from the X-ray detection unit. The input unit can input judgment units to be used from among the plurality of judgment units. The storage unit stores a plurality of the X-ray transmission images including X-ray transmission images relating to other goods that the inspection unit inspected prior to the goods that are current inspection targets in the inspection unit. The control unit receives input from the input unit. Furthermore, the control unit causes the predetermined judgment units that are to be used in an inspection of the past X-ray transmission images stored in the storage unit to be input from the input unit.

In this X-ray inspection apparatus, whether appropriate inspections are able to be implemented can be checked by employing a predetermined judgment unit instead of a judgment unit tending to judge conforming goods as nonconforming goods or a judgment unit tending to judge nonconforming goods as conforming goods and applying it to the past X-ray transmission images. As a result, impacts on inspection performance can be checked without running the goods through the X-ray inspection apparatus.

An X-ray inspection apparatus pertaining to a second aspect includes a conveyance unit, an X-ray irradiation unit, an X-ray detection unit, an inspection unit, an input unit, a storage unit, and a control unit. The conveyance unit conveys goods. The X-ray irradiation unit irradiates the conveyed goods with X-rays. The X-ray detection unit detects the X-rays transmitted through the goods. The inspection unit includes one or more judgment units and performs inspections of the goods as a result of the judgment unit making conforming/nonconforming judgments with respect to X-ray transmission images of the goods generated based on signals output from the X-ray detection unit. The input unit can input a predetermined item to be used in the conforming/nonconforming judgments by the judgment unit. The storage unit stores a plurality of the X-ray transmission images including X-ray transmission images relating to other goods that the inspection unit inspected prior to the goods that are current inspection targets in the inspection unit. The control unit receives input from the input unit. The judgment unit has as the predetermined item one or more correction units for correcting the X-ray transmission images and uses a predetermined correction unit to correct the X-ray transmission images in the inspections. The control unit causes the predetermined correction unit that is to be used in an inspection of the past X-ray transmission images stored in the storage unit to be input from the input unit.

In this X-ray inspection apparatus, whether appropriate inspections are able to be implemented can be checked by employing the predetermined correction unit instead of a correction unit tending to perform processing with which conforming goods easily become nonconforming goods or a correction unit tending to perform processing with which nonconforming goods easily become conforming goods and applying it to the past X-ray transmission images. As a result, impacts on inspection performance can be checked without running the goods through the X-ray inspection apparatus.

An X-ray inspection apparatus pertaining to a third aspect includes a conveyance unit, an X-ray irradiation unit, an X-ray detection unit, an inspection unit, an input unit, a storage unit, and a control unit. The conveyance unit conveys goods. The X-ray irradiation unit irradiates the conveyed goods with X-rays. The X-ray detection unit detects the X-rays transmitted through the goods. The inspection unit includes one or more judgment units and performs inspections of the goods by causing a predetermined judgment unit to make conforming/nonconforming judgments with respect to X-ray transmission images of the goods generated based on signals output from the X-ray detection unit. The input unit can input thresholds to be used in the conforming/nonconforming judgments by the judgment unit. The storage unit stores a plurality of the X-ray transmission images including X-ray transmission images relating to other goods that the inspection unit inspected prior to the goods that are current inspection targets in the inspection unit. The control unit receives input from the input unit. The judgment unit has one or more parameters for judging whether the goods are conforming or nonconforming. The control unit causes the threshold of the parameter that is to be used in an inspection of the past X-ray transmission images stored in the storage unit to be input from the input unit.

In this X-ray inspection apparatus, whether appropriate inspections are able to be implemented can be checked by changing the threshold of the parameter of a judgment unit tending to judge conforming goods as nonconforming goods or a judgment unit tending to judge nonconforming goods as conforming goods and applying it to the past X-ray transmission images. As a result, impacts on inspection performance can be checked without running the goods through the X-ray inspection apparatus.

An X-ray inspection apparatus pertaining to a fourth aspect is the X-ray inspection apparatus pertaining to the third aspect, wherein when the threshold of the parameter is changed from a first value to a second value prior to inspecting the goods that are the current inspection targets, the control unit causes the X-ray transmission images stored in the storage unit to be inspected via the inspection unit based on the second value.

In this X-ray inspection apparatus, what will happen if the past X-ray transmission images that were inspected using the first value are inspected using the second value instead of the first value can be checked even without the actual goods corresponding to those past X-ray transmission images.

An X-ray inspection apparatus pertaining to a fifth aspect is the X-ray inspection apparatus pertaining to the fourth aspect, wherein the inspection based on the second value is performed without conveying the goods that are the current inspection targets.

An X-ray inspection apparatus pertaining to a sixth aspect is the X-ray inspection apparatus pertaining to any one of the first aspect to the fifth aspect, wherein the storage unit stores the X-ray transmission images of the goods that have been produced.

In this X-ray inspection apparatus, the X-ray transmission images are stored regardless of whether the inspection results are conforming or nonconforming, so if at a later date it is found that the X-ray inspection apparatus tended to judge conforming goods as nonconforming goods or it is found that the X-ray inspection apparatus tended to judge nonconforming goods as conforming goods, optimal inspection conditions can be rechecked without running the actual goods through the X-ray inspection apparatus.

An X-ray inspection apparatus pertaining to a seventh aspect is the X-ray inspection apparatus pertaining to any one of the first aspect to the fifth aspect, wherein the storage unit stores the X-ray transmission images of the goods that have been judged to be nonconforming.

In this X-ray inspection apparatus, the storage unit narrows down the X-ray transmission images it stores to just the X-ray transmission images of the goods that were judged to be nonconforming goods, so storage space is saved.

An X-ray inspection apparatus pertaining to an eighth aspect is the X-ray inspection apparatus pertaining to any one of the first aspect to the seventh aspect, wherein the input unit doubles as a display unit that displays results of the inspections. In this X-ray inspection apparatus, the X-ray transmission images can be presented via the input unit to the operator.

An X-ray inspection apparatus pertaining to a ninth aspect is the X-ray inspection apparatus pertaining to the eighth aspect, wherein the display unit collectively displays a predetermined quantity of the X-ray transmission images out of the X-ray transmission images stored by the storage unit.

An X-ray inspection apparatus pertaining to a tenth aspect is the X-ray inspection apparatus pertaining to the ninth aspect, wherein the display unit enlarges and displays one of the X-ray transmission images that has been selected out of the collectively displayed X-ray transmission images.

An X-ray inspection apparatus pertaining to an eleventh aspect is the X-ray inspection apparatus pertaining to the third aspect, wherein a plurality of the judgment units include a first judgment unit and a second judgment unit. The first judgment unit and the second judgment unit each have a first parameter. The threshold of the first parameter of the first judgment unit is different from the threshold of the first parameter of the second judgment unit.

### ADVANTAGEOUS EFFECTS OF INVENTION

In the X-ray inspection apparatus pertaining to this invention, a predetermined judgment unit can be employed instead of a judgment unit tending to judge conforming goods as nonconforming goods or a judgment unit tending to judge nonconforming goods as conforming goods and applied to past X-ray transmission images. Furthermore, a predetermined correction unit can be employed instead of a correction unit tending to perform processing with which conforming goods easily become nonconforming goods or a correction unit tending to perform processing with which nonconforming goods easily become conforming goods and applied to past X-ray transmission images. Moreover, the threshold of a parameter of a judgment unit tending to judge conforming goods as nonconforming goods or a judgment unit tending to judge nonconforming goods as conforming goods can be changed and applied to past X-ray transmission images. Because of this, whether appropriate inspections are able to be implemented can be checked. As a result, impacts on inspection performance can be checked without running the goods through the X-ray inspection apparatus.

### BRIEF DESCRIPTION OF THE DRAWINGS

FIG. 1 is an external perspective view of an X-ray inspection apparatus pertaining to an embodiment of this invention;
FIG. 2 is a view of processes upstream and downstream of the X-ray inspection apparatus;
FIG. 3 is a view showing the internal configuration of a shield box of the X-ray inspection apparatus;
FIG. 4 is a schematic diagram showing the principle of X-ray inspection;
FIG. 5 is a block diagram of a controller;
FIG. 6 is a flowchart showing the operation of a foreign object inspection unit;
FIG. 7 is a front view of a screen of a monitor displaying X-ray transmission images of chicken breasts that were judged to be contaminated with foreign objects;
FIG. 8 shows an enlarged screen of image P6 displayed in FIG. 7; and
FIG. 9 shows results of a reinspection performed by a seventh judgment unit on a past X-ray transmission image corresponding to image P6 after the threshold of a sensitivity filter of the seventh judgment unit has been changed.

### DETAILED DESCRIPTION

### (1) Overall Configuration of X-ray Inspection Apparatus 10

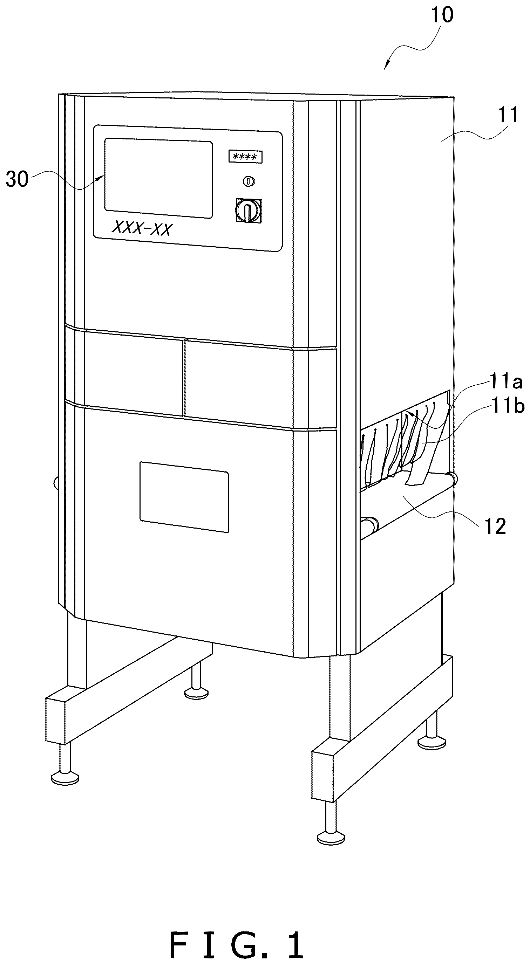

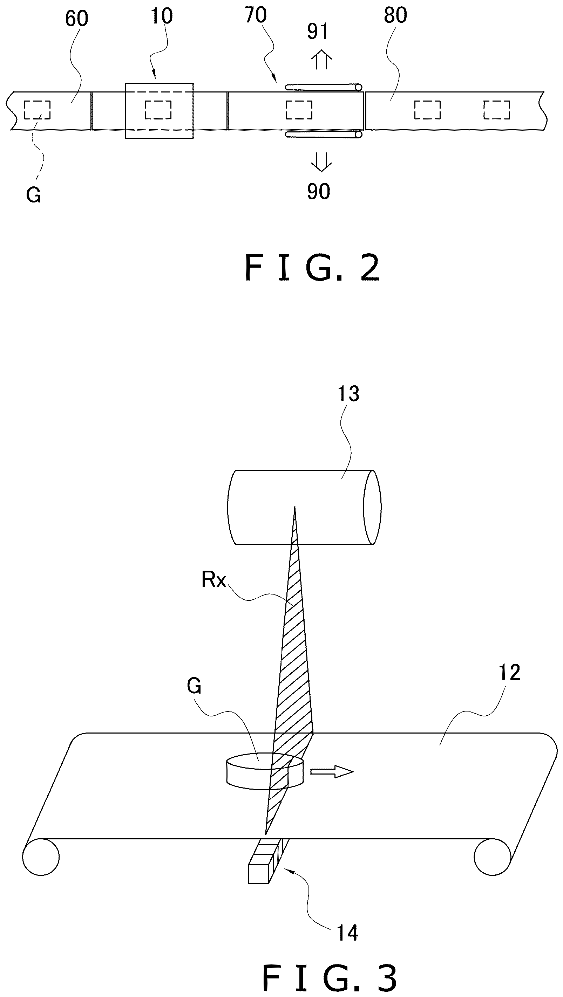

FIG. 1 is an external perspective view of an X-ray inspection apparatus 10 pertaining to an embodiment of this invention. Furthermore, FIG. 2 is a view of processes upstream and downstream of the X-ray inspection apparatus 10. Turning now to FIG. 1 and FIG. 2, the X-ray inspection apparatus 10 is incorporated into a production line of goods G such as foods and performs quality inspections of the goods G. Furthermore, the X-ray inspection apparatus 10 irradiates the goods G, which are continuously conveyed thereto, with X-rays to judge whether the goods G are conforming or nonconforming.

The goods G, which are inspection objects, are transported by an upstream conveyor 60 to the X-ray inspection apparatus 10. The goods G are classified into conforming goods or nonconforming goods in the X-ray inspection apparatus 10. The results of the inspections by the X-ray inspection apparatus 10 are sent to a sorting mechanism 70 disposed downstream of the X-ray inspection apparatus 10.

The sorting mechanism 70 sends the goods G that have been judged to be conforming goods in the X-ray inspection apparatus 10 to a conveyor 80 for discharging the conforming goods and sorts the goods G that have been judged to be nonconforming goods in the X-ray inspection apparatus 10 in nonconforming good discharge directions 90, 91.

### (2) Detailed Configuration

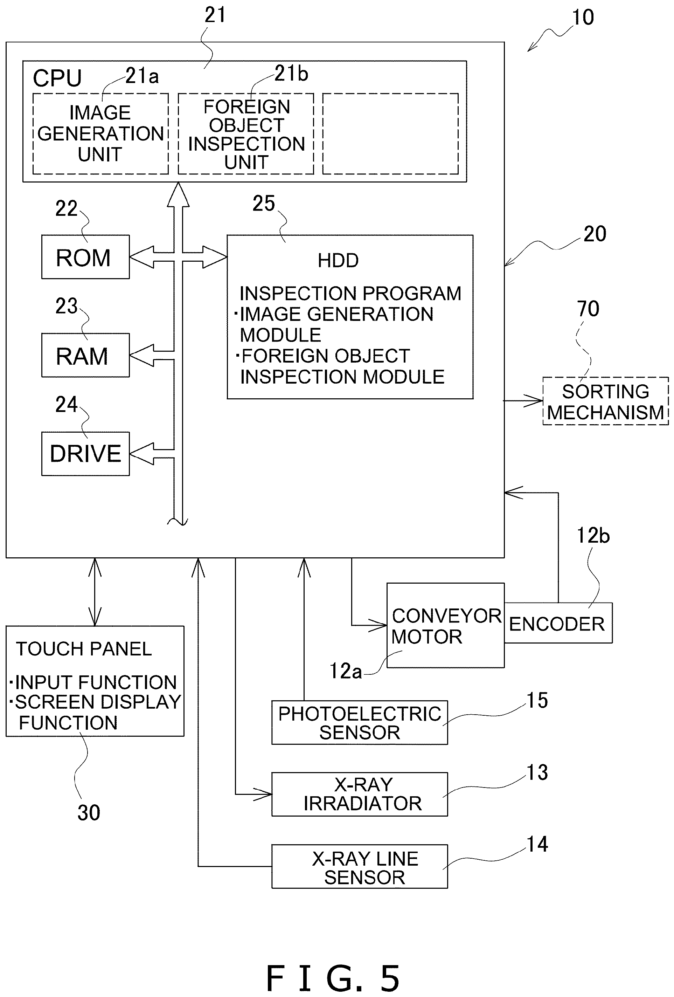

FIG. 3 is a view showing the internal configuration of a shield box 11 of the X-ray inspection apparatus 10. Turning now to FIG. 1 and FIG. 3, the X-ray inspection apparatus 10 is configured by a shield box 11, a conveyor 12, an X-ray irradiator 13, an X-ray line sensor 14, a monitor 30 with a touch panel function, and a controller 20 (see FIG. 5).

### (2-1) Shield Box 11

In both side surfaces of the shield box 11 are formed openings 11a for conveying the goods G into and out of the shield box 11. The openings 11a are closed off by shielding curtains 11b to prevent X-rays from leaking to the outside of the shield box 11. The shielding curtains 11b are made of a rubber including lead and are pushed aside by the goods G when the goods G pass though the openings 11a.

Inside the shield box 11 are housed the conveyor 12, the X-ray irradiator 13, the X-ray line sensor 14, and the controller 20. Furthermore, the monitor 30, a key insertion opening, and a power switch are disposed in the upper portion of the front surface of the shield box 11.

### (2-2) Conveyor 12

The conveyor 12 conveys the goods G inside the shield box 11 and, as shown in FIG. 1, is disposed so as to penetrate the openings 11a formed in both side surfaces of the shield box 11. The conveyor 12 has an endless belt that is rotated by a drive roller driven by a conveyor motor 12a (see FIG. 5) to convey the goods G placed on the belt.

The conveyance speed of the conveyor 12 is finely controlled by inverter control of the conveyor motor 12a by the controller 20 so that it becomes the set speed input by an operator. Furthermore, an encoder 12b (see FIG. 5) that detects the conveyance speed of the conveyor 12 and sends it to the controller 20 is attached to the conveyor motor 12a.

### (2-3) X-ray Irradiator 13

As shown in FIG. 3, the X-ray irradiator 13 is disposed above the conveyor 12 and emits X-rays in a fan-shaped irradiation range Rx toward the X-ray line sensor 14 located under it.

### (2-4) X-ray Line Sensor 14

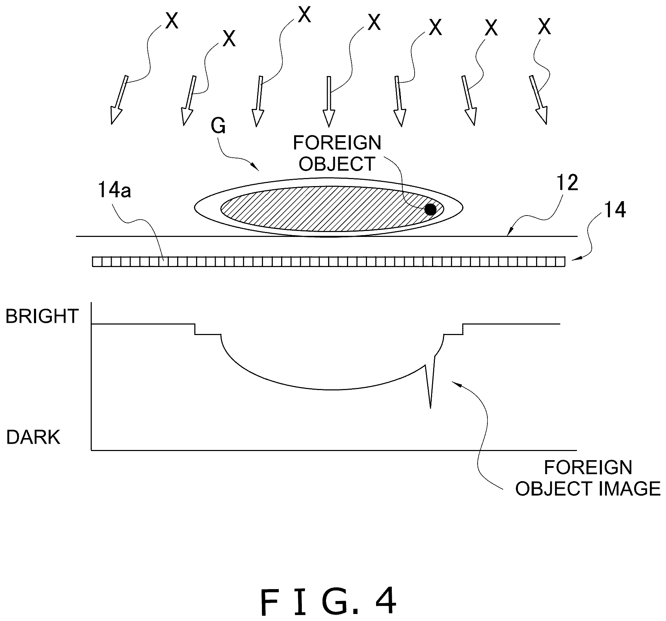

FIG. 4 is a schematic diagram showing the principle of X-ray inspection. Turning now to FIG. 4, the X-ray line sensor 14 is disposed under the conveyor 12 and is configured mainly from numerous pixel sensors 14a. The pixel sensors 14a are horizontally arranged in a straight line in a direction orthogonal to the conveyance direction of the conveyor 12. Furthermore, each pixel sensor 14a detects the X-rays transmitted through the goods G and the conveyor 12 and outputs an X-ray transmission signal. The X-ray transmission signals represent the brightness of the X-rays.

### (2-5) Monitor 30

The monitor 30 is a liquid crystal display with a full-dot display and displays a screen that prompts the operator to input predetermined judgment units that become necessary during the inspections, input predetermined filters, and input thresholds of predetermined parameters. Furthermore, the monitor 30 also has a touch panel function and receives input from the operator.

### (2-6) Controller 20

FIG. 5 is a block diagram of the controller 20. Turning now to FIG. 5, the controller 20 includes a central processing unit (CPU) 21, a read-only memory (ROM) 22, a random-access memory (RAM) 23, a hard disk drive (HDD) 25, and a drive 24 for inserting storage media.

The CPU 21 executes various types of programs stored in the ROM 22 and the HDD 25. Furthermore, the HDD 25 also stores and accumulates inspection results. Conditions and items necessary for the inspections can be set and changed by input from the operator using the touch panel function of the monitor 30. The operator can set these data to be stored and accumulated not only in the HDD 25 but also in a storage medium inserted into the drive 24.

Furthermore, the controller 20 is connected to the conveyor motor 12a, the encoder 12b, the X-ray irradiator 13, the X-ray line sensor 14, and a photoelectric sensor 15. The photoelectric sensor 15 is a synchronous sensor for detecting the timings when the goods G, which are inspection objects, pass through the fan-shaped X-ray irradiation range Rx (see FIG. 3).

### (3) Configurations of CPU 21

The HDD 25 of the controller 20 stores an inspection program including an image generation module and a foreign object inspection module. The CPU 21 of the controller 20 operates as an image generation unit 21a and a foreign object inspection unit 21b by reading and executing these program modules.

### (3-1) Image Generation Unit 21a

The image generation unit 21a generates X-ray transmission images of the goods G based on the X-ray transmission signals output from the X-ray line sensors 14. The image generation unit 21a acquires, at fine time intervals, the X-ray transmission signals output from each of the pixels sensors 14a of the X-ray line sensor 14 when the goods G pass through the fan-shaped X-ray irradiation range Rx (FIG. 3) and generates X-ray transmission images of the goods G based on the acquired X-ray transmission signals. It will be noted that the timings when the goods G pass through the fan-shaped X-ray irradiation range Rx are judged by signals from the photoelectric sensor 15. The image generation unit 21a generates X-ray transmission images representing the goods G by combining, in a matrix in a time series, the data for each fine time interval relating to the brightness of the X-rays obtained from each of the pixel sensors 14a of the X-ray line sensor 14.

Furthermore, the image generation unit 21a has a function for edge processing that accentuates spatial variations in luminance in the X-ray transmission images as outlines in order to identify the outlines. In other words, the image generation unit 21a can detect the boundaries (the outlines of the goods G) between the goods G and areas other than the goods G by detecting places (edges) where there are sharp changes in brightness in the X-ray transmission images.

### (3-2) Foreign Object Inspection Unit 21b

The foreign object inspection unit 21b detects foreign objects included in the goods G by performing binarization processing on the X-ray transmission images of the goods G generated by the image generation unit 21a.

Specifically, the foreign object inspection unit 21b compares the gray values of each of the pixels configuring the X-ray transmission images with predetermined thresholds and judges whether the gray values of each of the pixels configuring the X-ray transmission images are equal to or less than the predetermined thresholds. Here, the predetermined thresholds include a threshold for identifying the background and areas other than the background and a threshold for identifying the goods G and areas other than the goods G.

The foreign object inspection unit 21b performs filter processing on the X-ray transmission images so that, out of all the pixels configuring the X-ray transmission images, pixels where the luminance (intensity) of the transmitted X-rays exceeds the predetermined thresholds are represented by a shading corresponding to white, for example, and pixels where the luminance (intensity) of the transmitted X-rays is equal to or lower than the predetermined thresholds are represented by a shading corresponding to black, for example.

When there are regions that appear darker than the preset thresholds in the X-ray transmission images of the goods G, the foreign object inspection unit 21b judges that those goods G are contaminated with foreign objects and judges those goods G to be abnormal.

### (4) Adjustment of Inspection Performance using Past X-ray Transmission Images

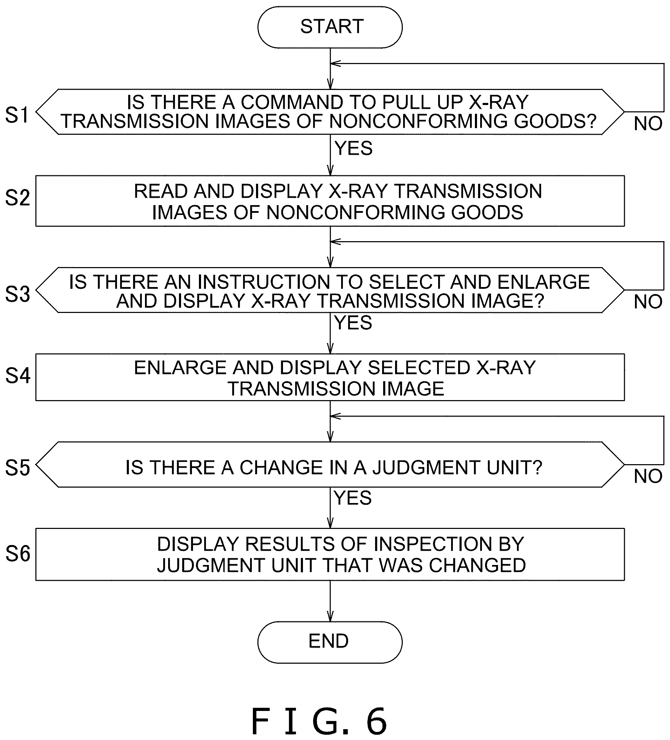

Here, a procedure by which the foreign object inspection unit 21b adjusts the inspection performance using past X-ray transmission images will be described. It will be assumed that the HDD 25 stores X-ray transmission images of chicken breasts that were produced in the past and judged to have foreign objects and to be nonconforming. Here, the stored X-ray transmission images are image data prior to being subjected to various types of processing. FIG. 6 is a flowchart showing the operation of the foreign object inspection unit 21b during the inspection performance adjustment.

### (4-1) Step S1

Turning now to FIG. 6, in step S1, the foreign object inspection unit 21b judges whether there is a command to call up X-ray transmission images of nonconforming goods. The call-up command is input by the operator from the monitor 30. The operator can call up the X-ray transmission images of the chicken breasts that were judged to be contaminated with foreign objects and deemed to be nonconforming goods in the past and adjust judgment criteria in order optimize the inspection performance prior to an inspection or during an inspection.

### (4-2) Step S2

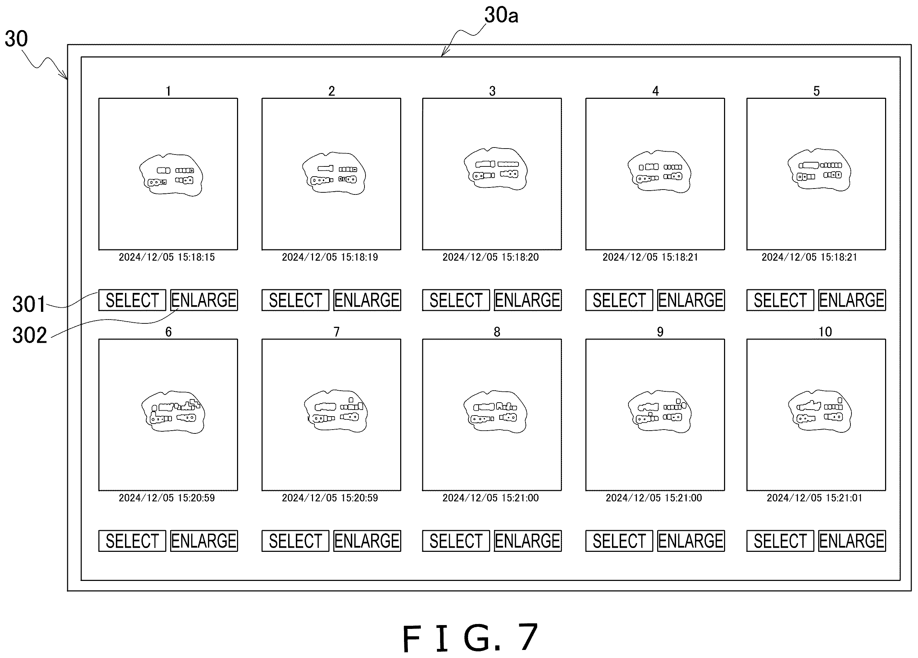

In step S2, the foreign object inspection unit 21b reads and displays on the monitor 30 the X-ray transmission images of the nonconforming goods stored in the HDD 25. FIG. 7 is a front view of a screen 30a of the monitor 30 displaying X-ray transmission images of chicken breasts that were judged to be contaminated with foreign objects.

Turning now to FIG. 7, the ten images appearing on the screen 30a of the monitor 30 are X-ray transmission images of chicken breasts stored in the HDD 25. Numbers from 1 to 10 are assigned in chronological order to each of the X-ray transmission images. Each of the images P1 to P10 includes frames surrounding areas that were judged to be foreign objects in the chicken breast.

### (4-3) Step S3

In step S3, the foreign object inspection unit 21b judges whether there is an instruction to select and enlarge and display any of the ten X-ray transmission images appearing on the monitor 30. For example, when the operator discovers an image that the operator suspects is a misjudgment among the images P1 to P10, the operator presses a select button 301 located under that image and then presses an enlarge button 302 to enlarge and display just that screen. However, the operator can also enlarge and display that screen by pressing just the enlarge button 302. Therefore, the monitor 30 may have a configuration in which it does not have the select buttons 301.

When the select button 301 and the enlarge button 302 have been pressed, the foreign object inspection unit 21b judges that there is an instruction to select and enlarge and display the corresponding X-ray transmission image and proceeds to step S4. Hereinafter, description will be given on the assumption that image P6 has been selected.

### (4-4) Step S4

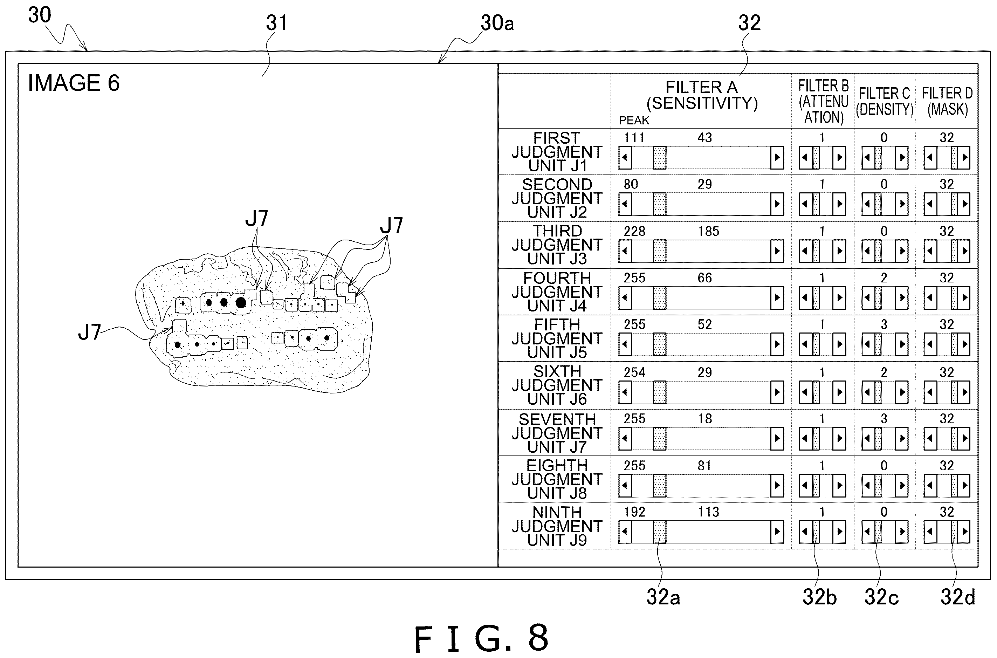

In step S4, the foreign object inspection unit 21b enlarges and displays the selected X-ray transmission image. FIG. 8 shows an enlarged screen of image P6 shown in FIG. 7. Turning now to FIG. 8, in a first frame 31 on the left side when viewed from the front is displayed an enlarged image of the X-ray transmission image of the chicken breast that was judged to be contaminated with foreign objects.

Furthermore, in a second frame 32 on the right side when viewed from the front are displayed a first judgment unit J1 to a ninth judgment unit J9 that were used to judge whether the chicken breast was conforming or nonconforming out of a plurality of judgment units that the foreign object inspection unit 21b has. The judgment units that are to be used in the conforming/nonconforming judgments are input by the operator from the monitor 30. Consequently, the first judgment unit J1 to the ninth judgment unit J9 were input during the previous inspection.

### (Overview of First Judgment Unit J1 to Ninth Judgment Unit J9)

The first judgment unit J1 to the ninth judgment unit J9 perform different types of processing for the judgments or use different conditions even if the types of processing are the same. For example, each judgment unit implements edge processing and binarization processing.

Furthermore, each of the first judgment unit J1 to the ninth judgment unit J9 has a plurality of filters A to D for detecting foreign objects. In this embodiment, the specific content of the filters A to D is set by the user.

### (Overview of Filters A to D)

Thresholds serving as criteria for distinguishing whether foreign objects are present are set for each of the filters A to D, and the user sets the thresholds.

If the user makes a mistake in setting a threshold, a conforming good will be judged to be a nonconforming good, or a nonconforming good will be judged to be a conforming good. When the operator judges that a threshold was not appropriate in an initial inspection, the operator can correct the threshold to an appropriate value, so in that sense, each of the filters A to D can be said to be a "correction unit."

### (Filter A)

In this embodiment, filter A is a sensitivity filter. The sensitivity filter judges that a foreign object is present if, in an image for inspection obtained by performing predetermined processing on the X-ray transmission image, a reaction value represented by each of the pixels exceeds a set threshold (hereinafter called a "sensitivity threshold"). In the sensitivity filter, misdetections are reduced by adjusting the sensitivity threshold.

For example, the peak value of the sensitivity filter in the first judgment unit J1 is 111, and the sensitivity threshold is set to 43. Consequently, if the reaction value is equal to or less than 43, it is judged that no foreign objects are present, and if the reaction value exceeds 43, it is judged that a foreign object is present. As shown in FIG. 8, the sensitivity thresholds can be changed by sliding cursors 32a left and right.

### (Filter B)

Filter B is an attenuation filter. The attenuation filter judges whether foreign objects are present based on the attenuation of the transmitted X-rays. Misdetections are reduced by adjusting the attenuation level. Furthermore, increasing the attenuation level inhibits extraction of edge portions of the inspection objects appearing in the images so that just foreign objects are extracted with a high sensitivity.

For example, the attenuation filters in each of the first judgment unit J1 to the ninth judgment unit J9 are set to level 1, and if the attenuation exceeds level 1, it is judged that a foreign object is present. As shown in FIG. 8, the levels can be changed by sliding cursors 32b left and right.

### (Filter C)

Filter C is a density filter. The density filter judges whether foreign objects are present based on the densities of pixels whose reaction value exceeds the sensitivity threshold in images obtained by performing predetermined processing on the X-ray transmission images. For example, if the reaction value exceeds the sensitivity threshold in just one pixel, the potential is high that this is due to noise and not a foreign object. By contrast, if the reaction value exceeds the sensitivity threshold in 9 pixels comprising 3 × 3 vertical and horizontal pixels, the potential is high that this is due to a foreign object. Furthermore, increasing the density of the density filter allows small irregularities in the inspection objects to be ignored and just foreign objects to be extracted.

For example, the density of the density filter in the fourth judgment unit J4 is set to 2, so if the reaction value is equal to or less than the sensitivity threshold of 66 in 4 pixels comprising 2 × 2 vertical and horizontal pixels, it is judged that no foreign objects are present, and if the reaction value exceeds the sensitivity threshold of 66, it is judged that a foreign object is present. As shown in FIG. 8, the densities can be changed by sliding cursors 32c left and right.

### (Filter D)

Filter D is a mask filter. The mask filter masks areas where the reaction values represented by the pixels are smaller than the threshold in the images obtained by performing predetermined processing on the X-ray transmission images, and is not used to judge whether foreign objects are present in those areas. In each of the first judgment unit J1 to the ninth judgment unit J9, the threshold of the mask filter is set to 32 so that packaging material for packaging the inspection objects is not subject to the foreign object inspection. As shown in FIG. 8, the thresholds can be changed by sliding cursors 32d left and right.

### (4-5) Step S5

Returning now to FIG. 6, in step S5, the foreign object inspection unit 21b judges whether there is a change in the first judgment unit J1 to the ninth judgment unit J9. Boxes labeled "J7" with leader lines in FIG. 8 represent regions that the seventh judgment unit J7 judged to have a foreign object in the past.

Boxes other than the boxes labeled "J7" surround regions that can clearly be distinguished as having a foreign object. By contrast, the boxes labeled "J7" appear to have no regions that can be distinguished as having a foreign object. Hereinafter, description will be given on the assumption that the seventh judgment unit J7 is making misjudgments.

If the operator has doubts about those judgments, the operator can correct the thresholds of the each of the filters of the seventh judgment unit J7, perform a reinspection of the past X-ray transmission images stored in the HDD 25, which is a storage device, and adjust the inspection performance.

The sensitivity threshold of the sensitivity filter of the seventh judgment unit J7 is set to 18, so it is highly likely that the value was one with which the seventh judgment unit J7 tended to judge that foreign objects were present. Consequently, the operator adjusts the inspection performance by increasing the sensitivity threshold. Hereinafter, description will be given on the assumption that the operator has changed the sensitivity threshold of the seventh judgment unit J7 from 18 to 68.

### (4-6) Step S6

In step S6, the foreign object inspection unit 21b performs an inspection using the seventh judgment unit J7, whose sensitivity threshold has been changed to 68, and the first judgment unit J1 to the sixth judgment unit J6, the eighth judgment unit J8, and the ninth judgment unit J9, whose sensitivity thresholds have not been changed, and displays the results on the monitor 30.

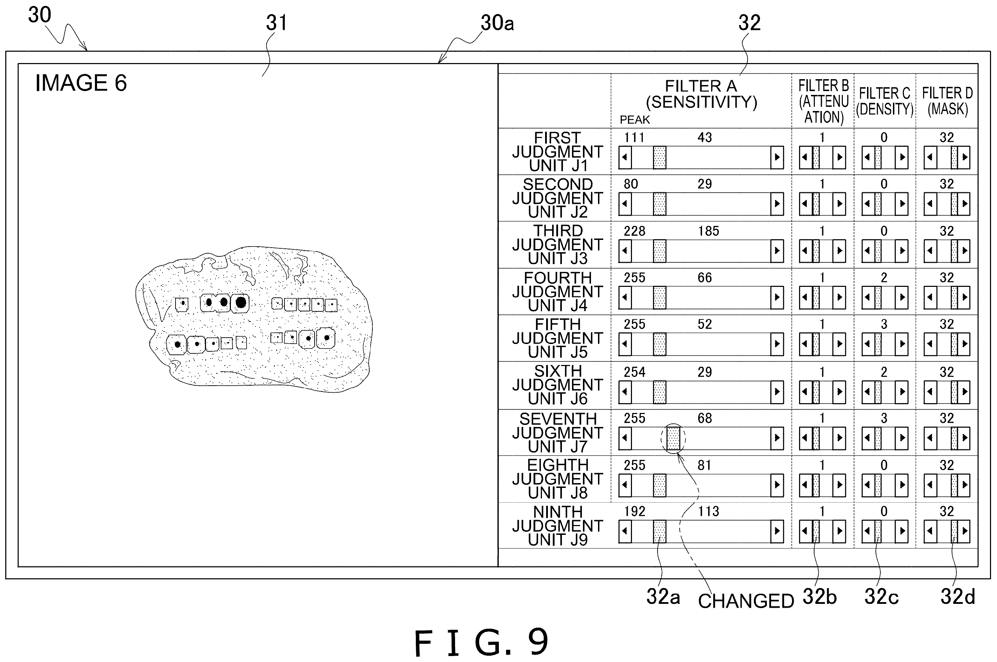

FIG. 9 shows results of a reinspection performed by the seventh judgment unit J7 on the past X-ray transmission image corresponding to image P6 after the sensitivity threshold of the seventh judgment unit J7 has been changed to 68. In FIG. 9, the boxes around the regions that had been judged as containing a foreign object in FIG. 7 are gone, and the misjudgments are eliminated.

The operator reinspects all the past X-ray transmission images stored in the HDD 25 to check whether the new sensitivity threshold is appropriate. The foreign object inspection unit 21b can display the results of the reinspection on the monitor 30 in a collective display such as shown in FIG. 7.

Furthermore, the operator may perform further sensitivity adjustments if there are still "foreign object present" misdetections even after reinspecting, after the sensitivity adjustment (after the sensitivity threshold is changed), the X-ray transmission images of the goods G that were judged as containing a foreign object in the past.

As described above, the seventh judgment unit J7 can use the past X-ray transmission images to check the extent to which there is a change in the inspection performance as a result of the sensitivity threshold of the seventh judgment unit J7 having been changed without running the goods G through the X-ray inspection apparatus.

### (5) Example Modifications

### (5-1) First Example Modification

The operator can not only input the plural judgment units J1 to J9 via the monitor 30 but can also delete any of the plural judgment units J1 to J9 that have already been input. For example, since the first judgment unit J1 and the second judgment unit J2 in the above embodiment perform the same type of processing but have different sensitivity thresholds, the operator may delete the second judgment unit J2, for example. Furthermore, the operator may replace the second judgment unit J2 with another judgment unit. The operator can delete judgment units, replace judgment units, and add new judgment units via the monitor 30.

### (5-2) Second Example Modification

The operator can not only input the plural filters A to D via the monitor 30 but can also change any of the plural filters A to D that have already been input. For example, the operator may replace the density filter with another filter. The operator can delete filters, replace filters, and add new filters via the monitor 30.

### (6) Characteristics

(6-1)
In the X-ray inspection apparatus 10, the foreign object inspection unit 21b performs inspections of the goods G by causing the first judgment unit J1 to the ninth judgment unit J9 to judge whether foreign objects are present in the X-ray transmission images of the goods G generated by the image generation unit 21a based on the signals output from the X-ray line sensor 14. Furthermore, the controller 20 causes the first judgment unit J1 to the ninth judgment unit J9 that are to be used in an inspection of past X-ray transmission images stored in the HDD 25 to be input from the touch panel of the monitor 30.

In this X-ray inspection apparatus 10, whether appropriate inspections are able to be implemented can be checked by employing a predetermined judgment unit instead of a judgment unit tending to judge conforming goods as nonconforming goods or a judgment unit tending to judge nonconforming goods as conforming goods and applying it to the past X-ray transmission images. As a result, impacts on inspection performance can be checked without running the goods G through the X-ray inspection apparatus 10.

(6-2)
Each of the first judgment unit J1 to the ninth judgment unit J9 corrects the X-ray transmission images using the plural filters A to D in the inspections. Furthermore, the controller 20 causes the filters A to D that are to be used in an inspection of past X-ray transmission images stored in the HDD 25 to be input from the touch panel of the monitor 30.

In this X-ray inspection apparatus 10, whether appropriate inspections are able to be implemented can be checked by employing a predetermined filter instead of a filter tending to perform processing with which conforming goods easily become nonconforming goods or a filter tending to perform processing with which nonconforming goods easily become conforming goods and applying it to the past X-ray transmission images. As a result, impacts on inspection performance can be checked without running the goods G through the X-ray inspection apparatus 10.

(6-3)
Each of the first judgment unit J1 to the ninth judgment unit J9 has one or more parameters as filter variables for judging whether foreign objects are present. Furthermore, the controller 20 causes the thresholds for sensitivity, attenuation, density, and masking, which are parameters to be used in an inspection of past X-ray transmission images stored in the HDD 25, to be input from the touch panel of the monitor 30.

In this X-ray inspection apparatus 10, whether appropriate inspections are able to be implemented can be checked by changing the threshold of a parameter of a judgment unit tending to judge conforming goods as nonconforming goods or a judgment unit tending to judge nonconforming goods as conforming goods and applying it to the past X-ray transmission images. As a result, impacts on inspection performance can be checked without running the goods G through the X-ray inspection apparatus 10.

(6-4)
When the threshold of a parameter has been changed from a first value to a second value prior to inspecting the goods G that are current inspection targets, the controller 20 causes the X-ray transmission images stored in the HDD 25 to be inspected via the foreign object inspection unit 21b based on the second value.

In this X-ray inspection apparatus 10, what will happen if the past X-ray transmission images that were inspected using the first value are inspected using the second value instead of the first value can be checked even without the actual goods G corresponding to those past X-ray transmission images.
(6-5)
   Furthermore, the inspection based on the second value is performed without conveying the goods G that are the current inspection targets.
(6-6)
   The HDD 25 stores the X-ray transmission images of the goods G that have been produced. In this X-ray inspection apparatus, the X-ray transmission images are stored regardless of conforming or nonconforming inspection results, so if at a later date it is found that the X-ray inspection apparatus 10 tended to judge conforming goods as nonconforming goods or it is found that the X-ray inspection apparatus 10 tended to judge nonconforming goods as conforming goods, optimal inspection conditions can be rechecked without running the actual goods G through the X-ray inspection apparatus 10.
(6-7)
   The HDD 25 stores the X-ray transmission images of the goods G that have been judged to be nonconforming. In this X-ray inspection apparatus 10, the HDD 25 narrows down the X-ray transmission images it stores to just the X-ray transmission images of the goods G that were judged to be nonconforming, so storage space is saved.
(6-8)
   The monitor 30 has both an input function and a display function for displaying the results of the inspections, so the X-ray transmission images can be presented via the monitor 30 to the user.
(6-9)
   The monitor 30 collectively displays a predetermined quantity of the X-ray transmission images out of the X-ray transmission images stored by the HDD 25.
(6-10)
   The monitor 30 enlarges and displays one of the X-ray transmission images that has been selected out of the collectively displayed X-ray transmission images.
(6-11)
   The plurality of judgment units include the first judgment unit J1 and the second judgment unit J2. Each of the first judgment unit and the second judgment unit has sensitivity as a variable for a sensitivity filter. The threshold of the sensitivity of the first judgment unit J1 is different from the threshold of the sensitivity of the second judgment unit J2.

### (7) Other

In the above embodiment, the CPU 21 performs X-ray inspections for foreign objects included in the goods G, but it may also be configured to perform X-ray inspections for cracks or chips in the goods G or for nonconforming goods due to insufficient quantities of individual items in goods made up of a set of multiple individual items. In this case, the CPU 21 stores a standard individual item shape and judges that there are cracks or chips by comparing the individual items with perceived shapes in obtained images. Furthermore, the CPU 21 stores the areas of the individual items and performs numerical quantity judgments by dividing areas perceived as goods by the individual item areas.

### REFERENCE SIGNS LIST

10 X-ray Inspection Apparatus
12 Conveyor (Conveyance Unit)
13 X-ray Irradiator (X-ray Irradiation Unit)
14 X-ray Line Sensor (X-ray Detection Unit)
21b Foreign Object Inspection Unit (Inspection Unit)
25 HDD (Storage Unit)
30 Monitor (Input Unit, Display Unit)
A to D Filters (Plurality of Correction Units)
J1 to J9 First Judgment Unit to Ninth Judgment Unit (Plurality of Judgment Units)
G Goods

### CITATION LIST

### <Patent Literature>

Patent Document 1: JP-A No. 2019-12011

## Claims

1. An X-ray inspection apparatus comprising:
a conveyance unit configured to convey goods;
an X-ray irradiation unit configured to irradiate the conveyed goods with X-rays;
an X-ray detection unit configured to detect the X-rays transmitted through the goods;
an inspection unit configured to include a plurality of judgment units and perform inspections of the goods by causing predetermined judgment units to make conforming/nonconforming judgments with respect to X-ray transmission images of the goods generated based on signals output from the X-ray detection unit;
an input unit configured to input judgment units to be used from among the plurality of judgment units;
a storage unit configured to store a plurality of the X-ray transmission images including X-ray transmission images relating to inspected goods that the inspection unit inspected prior to target goods that are current inspection targets in the inspection unit; and
a control unit configured to receive input from the input unit,
wherein the control unit is configured to cause the predetermined judgment units that are to be used in an inspection of the past X-ray transmission images stored in the storage unit to be input from the input unit.

2. An X-ray inspection apparatus comprising:
a conveyance unit configured to convey goods;
an X-ray irradiation unit configured to irradiate the conveyed goods with X-rays;
an X-ray detection unit configured to detect the X-rays transmitted through the goods;
an inspection unit configured to include one or more judgment units and perform inspections of the goods as a result of the judgment unit making conforming/nonconforming judgments with respect to X-ray transmission images of the goods generated based on signals output from the X-ray detection unit;
an input unit configured to input a predetermined item to be used in the conforming/nonconforming judgments by the judgment unit;
a storage unit configured to store a plurality of the X-ray transmission images including X-ray transmission images relating to inspected goods that the inspection unit inspected prior to target goods that are current inspection targets in the inspection unit; and
a control unit configured to receive input from the input unit,
wherein
the judgment unit is configured to have as the predetermined item one or more correction units for correcting the X-ray transmission images and use a predetermined correction unit to correct the X-ray transmission images in the inspections, and
the control unit is configured to cause the predetermined correction unit that is to be used in an inspection of the past X-ray transmission images stored in the storage unit to be input from the input unit.

3. An X-ray inspection apparatus comprising:
a conveyance unit configured to convey goods;
an X-ray irradiation unit configured to irradiate the conveyed goods with X-rays;
an X-ray detection unit configured to detect the X-rays transmitted through the goods;
an inspection unit configured to include one or more judgment units and performs inspections of the goods by causing a predetermined judgment unit to make conforming/nonconforming judgments with respect to X-ray transmission images of the goods generated based on signals output from the X-ray detection unit;
an input unit configured to input thresholds to be used in the conforming/nonconforming judgments by the judgment unit;
a storage unit configured to store a plurality of the X-ray transmission images including X-ray transmission images relating to inspected goods that the inspection unit inspected prior to target goods that are current inspection targets in the inspection unit; and
a control unit configured to receive input from the input unit,
wherein
the judgment unit is configured to have one or more parameters for judging whether the target goods are conforming or nonconforming, and
the control unit is configured to cause the threshold of the parameter that is to be used in an inspection of the past X-ray transmission images stored in the storage unit to be input from the input unit.

4. The X-ray inspection apparatus according to claim 3, wherein when the threshold of the parameter is changed from a first value to a second value prior to inspecting the target goods that are the current inspection targets, the control unit is configured to cause the X-ray transmission images stored in the storage unit to be inspected via the inspection unit based on the second value.

5. The X-ray inspection apparatus according to claim 4, wherein the inspection based on the second value is performed without conveying the target goods that are the current inspection targets.

6. The X-ray inspection apparatus according to any one of claim 1 to claim 5, wherein the storage unit is configured to store the X-ray transmission images of the goods that have been produced.

7. The X-ray inspection apparatus according to any one of claim 1 to claim 5, wherein the storage unit is configured to store the X-ray transmission images of the goods that have been judged to be nonconforming.

8. The X-ray inspection apparatus according to any one of claim 1 to claim 7, wherein the input unit is configured to double as a display unit that displays results of the inspections.

9. The X-ray inspection apparatus according to claim 8, wherein the display unit collectively displays a predetermined quantity of the X-ray transmission images out of the X-ray transmission images stored by the storage unit.

10. The X-ray inspection apparatus according to claim 9, wherein the display unit enlarges and displays one of the X-ray transmission images that has been selected out of the collectively displayed X-ray transmission images.

11. The X-ray inspection apparatus according to claim 3, wherein
a plurality of the judgment units include a first judgment unit and a second judgment unit,
the first judgment unit and the second judgment unit each have a first parameter, and
the threshold of the first parameter of the first judgment unit is different from the threshold of the first parameter of the second judgment unit.
